# EUROPEAN PATENT SPECIFICATION

(11) **EP 2 981 432 B1**
(45) Date of publication and mention of the grant of the patent: **31.05.2017**
(21) Application number: 14715337.3
(22) Date of filing: 07.04.2014
(51) Int. Cl.: B60L 11/18

(54) **CONNECTING APPARATUS FOR CONNECTING AN ELECTRICALLY POWERED VEHICLE TO A CHARGING STATION**
VERBINDUNGSVORRICHTUNG ZUM VERBINDEN EINES ELEKTRISCH ANGETRIENEN FAHRZEUGS MIT EINER LADESTATION
DISPOSITIF DE CONNEXION POUR CONNECTER UN VÉHICULE À PROPULSION ÉLECTRIQUE À UNE STATION DE CHARGE

(30) Priority: 05.04.2013 WO PCT/EP2013/057207
(43) Date of publication of application: 10.02.2016
(73) Proprietor: ABB Schweiz AG, 5400 Baden (CH)
(72) Inventor: WARNER, Bruce, CH-1170 Aubonne (CH); DUMITRU, Alexandru, 1211 Geneve 2 (CH); HAEBERLIN, Philippe, CH-1256 Troinex-GE (CH)
(74) Representative: ABB Patent Attorneys
(86) International application number: PCT/EP2014/056948
(87) International publication number: WO 2014/162015

(56) References cited:
- EP-A2- 2 345 554
- WO-A1-2011/099212
- WO-A1-2012/118422
- WO-A2-2010/003021

## Description

### Technical field

The present invention relates to charging systems for connecting electrically powered vehicles to a power feeding station to recharge an electrical energy storage device.

### Related art

Energy for electrically driven vehicles is usually stored in electrical energy storage devices, such as batteries or the like. The batteries need to be recharged regularly to ensure full operation of the electric vehicle. Privately used vehicles, such as cars, are usually operated to drive along a route once and their availability is restored after a sufficient time for recharging.

In contrast, vehicles for public transportation have a much longer operation time. Usually, the electrical energy stored in these vehicles does not provide sufficient capacity to operate public transportation vehicles, such as buses, over the entire operation time. Recharging stops, however, are not acceptable as the public transportation vehicle is filled with people to be commuted according to a bus schedule.

In order to keep the electrical energy storage device of such a vehicle as charged as possible, the brief bus stops for loading or unloading passengers can be used for connection to an electric power source in order to, at least partially, recharge the electrical energy storage device.

For electric buses, solutions found today are based on contacts through one or more divided pantographs or an arrangement of multiple pantographs on the roof of the vehicle or a division of a connecting bar on the wayside.

Furthermore, it would be inconvenient if the driver of the vehicle needed to manually establish a power connection each time the public transportation vehicle stops.

From document WO 2011/079 215 A2 a charging station for electric vehicles is known having connector braces to connect to contact plates or bars on the vehicle. The connector braces may have guiding strips with electrically conductive surfaces which converge such that the convergence is directed toward the electrically conductive surfaces. The alignment of the connector braces to the contact plates or bars on the vehicle is performed when the vehicle enters the charging station, so that the contact plates or bars move into the connector brace which is then aligned by means of the guiding strips.

Document WO 2011/064 596 A2 discloses an electric vehicle charging station having two pantographs arranged along the longitudinal axis of the vehicle to contact to power line bars when the vehicle is in position for recharging.

Document FR 2 802 069 discloses a charging station for an electric vehicle, such as a public bus, wherein an electrical connector to receive electrical power is arranged on the bus. The electrical connector is adapted to contact a corresponding connector on the charging station when the vehicle is in a position to connect the electrical connectors. However, this arrangement requires a relative positioning of the vehicle to the corresponding electrical connector on the charging station, which has to be assured by the driver of the vehicle by stopping the vehicle at a predefined position.

WO 2012/118422 A1 discloses an electrically powered bus with an arm on the rooftop. The pivotal arm is connected pivotable with a collector shoe at the end, which is in contact with the conductor line of a charging station during charging. The conductor line has positioning stops to guide by physical contact the collector shoe to the conductor line. The movement of the arm is a movement on a spherical surface.

US 2012111682A1 discloses a wayside mast with an electrically-supplying arm for charging a bus. The arm has a movable part, which permits to be displaced by pivoting upward if the current collector of the bus gets into physical contact with the movable part. The pivoting movement may be assisted by a motor which can be remote-controlled by a control device.

Hence, there is a need for an fully automatic connecting system for connecting an electrically driven vehicle to a charging station, wherein no active involvement of a driver or any mechanical guidance is required. Furthermore, the requirements for a stop on an exact stop position of the electrically driven vehicle should be low in order to keep the driver's focus on traffic events and the loading and unloading of passengers.

It is therefore an object of the present invention to provide an improved connecting system for establishing an electrical connection with an electrically driven vehicle at a charging station. Furthermore, it is an object of the present invention to ensure that the charging time at each stop of the electrically driven vehicle at a charging station is maximized by providing a quick connection and disconnection.

### Summary of the invention

This object has been achieved by the connecting apparatus according to claim 1, the vehicle, the charging station for an electrically driven vehicle, the charging system, and the method for connecting an electrically driven vehicle according to the further independent claims.

Further embodiments are indicated in the dependent subclaims.

According to a first aspect, a connecting apparatus for mounting on a rooftop of a vehicle or at a charging station and for providing an electrical connection between the charging station and the vehicle for charging an electrical energy storage device of the vehicle is provided. The connecting apparatus comprises:
- a contacting head for connecting to contacting head receiving means for transferring electrical energy;
- at least one alignment means for coupling the contacting head to the contacting head receiving means for electrically connecting to or disconnecting from the contacting head receiving means, respectively;
- a detector means configured to determine a relative position of the contacting head receiving means to the contacting head; and
- a control unit for controlling alignment between the contacting head and the contacting head receiving means in response to the determined position of the contacting head receiving means; and wherein the
- at least one alignment means comprises a horizontal positioning means for laterally moving the contacting head in a horizontal direction;
- a pivoting means for pivoting a contacting post carrying the contacting head at one end thereof from a parking position, in which the contacting post is substantially horizontal to a contacting position, in which the contacting post is elevated up to a substantially vertical position; and
- a vertical positioning means for telescoping the contacting post across the horizontal direction to adapt the length of the contacting post and
- wherein each of the horizontal positioning means, the pivoting means and the vertical positioning means performing an alignment movement and wherein each of the alignment movements being independent from the others.

One idea of the present invention is to provide a charging system for charging an electrically driven vehicle at a charging station. The electrically driven vehicle or the charging station is provided with a movable contacting head and an alignment unit to operate the contacting head, so that a connecting element of the connecting unit is aligned with and moved to a contacting head receiving means of the charging station or on the vehicle. The alignment unit uses means for detecting the position of the contacting head receiving means without the need of establishing a communication between the charging station and the vehicle. The provision of the alignment unit hence allows for omitting any additional effort of providing communication means between the charging station and the electrically driven vehicle, so that a simplified, quick and robust connection procedure without an exchange of any information can be provided. Providing individual alignment means for an individual alignment by a horizontal, vertical or pivotal movement of the contacting head provides a high flexibility for deviations of the vehicle parking position at charging stops. An automatic recognition of the charging infrastructure and stat of the charging process without driver interaction is provided.

Furthermore, adjusting the position of the vehicle in relation to the contacting head receiving means of the charging station is facilitated by means of the alignment unit since the accuracy requirements to stop the vehicle at predetermined exact stopping positions are loosened.

Furthermore, the detector means may be configured to determine the position of the contacting head receiving means as an absolute position in relation to the location of the detector means or as a relative position in relation to the location of the contacting head.

It may be provided that the detector means comprises an optical detector.

The control unit may be coupled with a geo-positioning system to determine whether a charging station is approached, wherein the alignment unit is configured to activate at least one of the at least one positioning means to move the contacting head towards the contacting head receiving means.

According to an embodiment, the control unit may be coupled with a geo-positioning system to determine whether a charging station is approached, wherein the control unit is configured to activate at least one of the at least one alignment means in order to move the contacting head towards the contacting head receiving means.

According to a further aspect, a vehicle is provided which comprises the above connecting apparatus arranged on a vehicle body.

Furthermore, a geo-positioning system may be provided for providing a geographical position information about the geographical position of the vehicle, wherein the alignment unit is configured to determine by comparison with a provided set of charging station positions whether the vehicle approaches a charging station position and, if approaching a charging station position is detected, to activate the alignment unit, in particular to elevate the contacting head to an elevated position.

According to a further aspect, a vehicle comprising electrical driving means is provided. The vehicle comprises a contacting head receiving means having contacting surfaces for being contacted through a contacting head, wherein the contacting head receiving means has a longitudinal contacting rail with a U-shaped cross section.

Furthermore, the contacting surfaces may be arranged in the inner of the U-shaped cross section and extend substantially in parallel along the contacting rail.

An optical marker may be attached at the contacting head receiving means to allow an optical detector to determine the position of the contacting head receiving means. Particularly, the optical marker may extend in the longitudinal direction of the contacting rail, wherein the optical marker includes two parallel recognizable stripes between which an opening of the U-shaped cross section is arranged.

According to a further aspect, a charging station for supplying electrical energy to a vehicle via a connecting apparatus is provided, wherein a contacting head receiving means is provided having contacting surfaces for contacting a contacting head; wherein the contacting head receiving means has a longitudinal contacting rail with an upside down U-shaped cross section. The contacting head receiving means is further provided with a first earth plate and a second earth plate and wherein the contacting surfaces, the first earth plate and the second earth plate are arranged in the inner of the U-shaped cross section and extend substantially in parallel along the contacting rail. A charging station with this contacting head receiving means configuration has the advantages that the earth connection is made first and disconnected last when coupling or decoupling. An earth resistance measurement may be configured to firstly check the quality (resistance) of the top earth connection and therefore the certainty that the contacting head is fully inserted into the contacting head receiving means. With above configuration a partial insertion or misalignment can not lead to a situation where a power contact is connect to earth or that the power contacts are inverted.

Moreover, a supply unit may be comprised for detecting whether a contacting head of a vehicle is connected to the contacting head receiving means and for supplying electrical energy to the contacting head receiving means if the electrical connection to the contacting head is detected.

Moreover, in the inner of the U-shaped cross section contacting surfaces may be arranged and extend substantially in parallel along the contacting rail.

According to an embodiment, an optical marker may be attached to the contacting head receiving means to allow the optical detector to determine the position of the contacting head receiving means.

It may be provided that the optical marker extends in the longitudinal direction of the contacting rail, wherein the optical marker includes two parallel recognizable stripes between which an opening of the U-shaped cross section is arranged.

According to a further aspect, a charging station for supplying electrical energy to an electrically driven vehicle, wherein the charging station is provided with the above connecting apparatus.

Moreover, a supply unit may be provided for detecting whether the contacting head is connected to the contacting head receiving means and for supplying electrical energy to the contacting head if the electrical connection with the contacting head receiving means is detected.

According to a further aspect, a charging system comprises the above electrically driven vehicle and the above a charging station.

According to a further aspect, a method for charging an electrical energy storing device of a vehicle is provided, comprising the steps of:
- detecting the position of a contacting head receiving means; and
- positioning a contacting head into the contacting head receiving means by
- pivot positioning a contacting post which carries a contacting head at one end thereof from a parking position, in which the contacting post is substantially horizontal to a contacting position, in which the contacting post is elevated up to a substantially vertical position, thereafter
- laterally and vertically positioning the contacting head for transferring electrical energy in response to the determined position of the contacting head receiving means.

The vertical positioning is performed by a means vertical positioning which telescopes the contacting post. The horizontal positioning is performed by a means horizontal positioning means and the vertical positioning is performed by a means vertical positioning means.

Furthermore, the detecting of the position of the contacting head receiving means is performed by recognizing a position of an optical marker at the contacting head receiving means using an optical detector..

It may be detected whether the contacting head is connected to the contacting head receiving means and wherein electrical energy is transferred to the electrical energy storing device if the electrical connection with the contacting head is detected.

According to an embodiment, it may be determined determine whether a charging station is approached, wherein at least one of the at least one alignment means is activated in order to move the contacting head towards the contacting head receiving means before the charging station has been reached.

### Brief description of the drawings

Embodiments of the present invention are described in more detail in the following description in conjunction with the accompanying drawings, in which:
- Figure 1: schematically shows a charging system with a charging station and an electrically driven vehicle;
- Figure 2: shows a connecting system being mounted on a rooftop of the electrically driven vehicle;
- Figure 3: shows a cross-sectional view through a feeding means of the charging station; and
- Figure 4: shows a cross-sectional view through a contacting head of a connecting arrangement.

### Description of embodiments

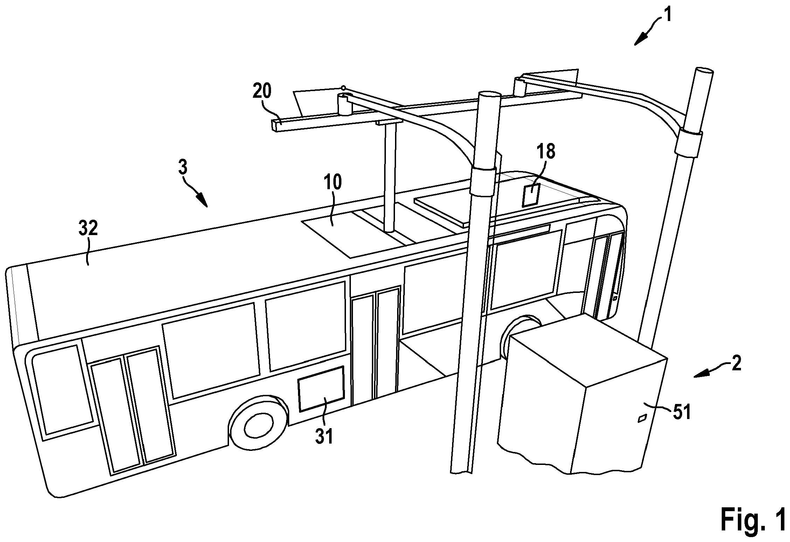

Figure 1 shows a charging system 1 including a charging station 2 and a vehicle 3, such as an electrically driven vehicle or a vehicle having electrical driving means, e.g. a bus for public transportation. The charging station 2 is located at one, several or all of the bus stops the electrically driven vehicle 3 is commuting to. In this way, an electrical connection between an electrical energy storage device 31 of the electrically driven vehicle 3 and the charging station 2 is established when the electrically driven vehicle 3 stops at the bus stop.

Before the electrically driven vehicle 3 leaves the bus stop, the electrical connection is disconnected and the electrically driven vehicle 3 is operated using the electrical energy stored in the electrical energy storage device 31.

As the electrically driven vehicle 3 stops at the bus stop only for a few tens of seconds, such as 15 to 30 seconds, it is essential in this configuration that the electrical connection is established as soon as the electrically driven vehicle 3 stops at the bus stop and is disconnected just before the electrically driven vehicle 3 starts moving again in order to leave the bus stop. Furthermore, the establishing of the electrical connection requires that the electrically driven vehicle 3 stops at a fixed position to facilitate alignment of the contacts to be connected to one another.

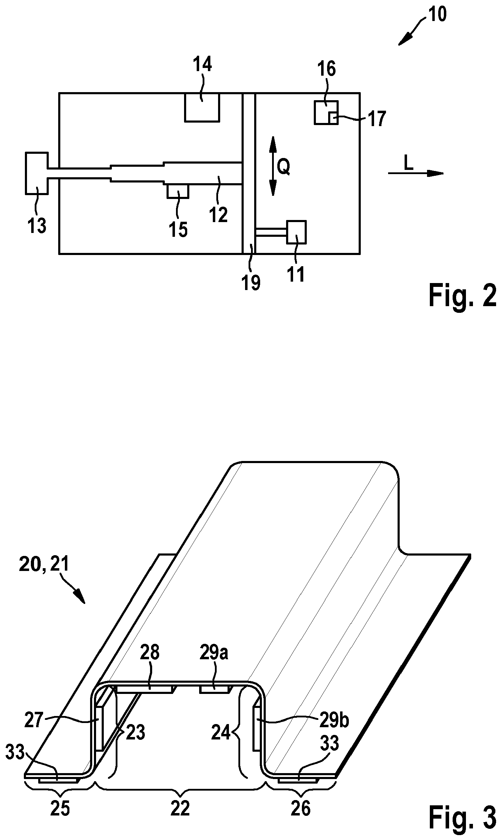

In particular, the electrically driven vehicle 3 has a connecting arrangement 10 (connecting apparatus), shown in more detail in Figure 2, which is attached to a rooftop 32 of the electrically driven vehicle 3 and is activated as soon as the electrically driven vehicle 3 approaches the charging station 2. Approaching the charging station 2 can be detected using an automatic positioning detection system, such as GPS, GLONASS and the like, and by comparing, on the one hand, the detected geographical position and the odometer reading of the bus with, on the other hand, predetermined geographical positions of bus stops.

The connecting arrangement 10 has a horizontal positioning means 11 as an alignment means for adjusting the position of a contacting post 12 in a horizontal direction Q, which is substantially perpendicular to a longitudinal axis L of the electrically driven vehicle 3. The movement of a contacting post 12 in a horizontal direction Q can be performed by a mechanical coupling e.g. with a thread rod 19 driven by the horizontal positioning means 11. As an alternative embodiment a tooth belt can provided instead of the thread rod 19 to provide a mechanical coupling for moving the contacting post 12 in the horizontal direction Q. At its lower end, the contacting post 12 has an inner thread engaged with the thread rod, so that a rotation of the thread rod moves the contacting post 12 laterally. Other mechanical implementations for causing the horizontal movement of the contacting post 12 are possible as well.

At its opposite (upper) end, the contacting post 12 carries a contacting head 13 which is adapted to establish connections to a contacting head receiving means 20 of the charging station 2.

Furthermore, the connecting arrangement 10 can comprise a horizontal pivoting means 14 and/or a vertical positioning means 15 as alignment means to adjust the vertical position of the contacting head 13. The pivoting means 14 allows for pivoting the contacting post 12 from a parking position, in which the contacting post 12 is substantially horizontal, i. e. in parallel to the plane of the rooftop 32, to a contacting position, in which the contacting post 12 is elevated up to a substantially vertical position. The mechanical implementation can make use of any means which are capable of lifting the contacting post 12, thus pivoting it around the thread rod 19.

The vertical positioning means 15 may allow for adapting the height of the contacting post 12 by telescoping. The contacting post 12 may include two or more telescoping elements configured to slide into each other, so that the length of the contacting post 12 can be controlled and the vertical position of the contacting head 13 (distance from the thread rod 19) can be set.

In general, the horizontal positioning means 11 and the first and second vertical alignment means 14, 15 can be actuated by individual means of an electrical, pneumatic, or hydraulic actuators, respectively. This gives a high flexibility to adjust the contacting head to the charging infrastructure in particular for buses which perform a kneeling movement before passengers entering or leaving the bus and to provide a coarse approach of the contacting head if approaching the charging point.

Furthermore, a control unit 16 is provided which is in contact with the horizontal positioning means 11 and the pivoting and vertical positioning means 14, 15 to control the movement and alignment of the contacting head 13. Moreover, the control unit 16 may be configured to detect an absolute position of the contacting head receiving means 20 which provides electrical energy supplied by the charging station for recharging the electrical energy storage device 31 of the electrically driven vehicle 3. The control unit 16 may be further configured to detect the relative position of the contacting head receiving means 20 in relation to the position of the contacting head 13. Once the control unit 16 has detected the absolute or relative position, the control unit 16 controls the horizontal positioning means 11 and the pivoting and vertical positioning means 14, 15 so that the contacting head 13 is moved horizontally and vertically into the contacting head receiving means 20.

The contacting head receiving means 20 substantially includes a contacting rail 21 extending into the longitudinal direction L. As shown in Figure 3, the contacting rail 21 has a cross section of an upside down U-shape. The U-shaped contacting rail 21 has a base portion 22, a first leg portion 23 and a second leg portion 24. At the ends of the first and second leg portions 23, 24 and opposite to the base portion 22, first and second extensions 25, 26 are provided which extend laterally away from one another, i. e. substantially in parallel to the base portion 22.

The inner surface of the contacting rail 21 is provided with contacting surfaces 27, 28. In the shown embodiment, a first contacting plate 27 is provided at an inner side of the first leg portion 23 and a second contacting plate 28 is provided at an inner side of the base portion 22 of the contacting rail 21. Also provided at the inner side of the base portion 22 of the contacting rail 21 and adjacent to as well as extending substantially in parallel to the second contacting plate 28, a first earth plate 29a is provided. At the inner side of the second leg portion 24, a second earth plate 29b is provided. The first contacting plate 27 and the second contacting plate 28, the first earth plate 29a and the second earth plate 29b substantially extend in parallel to the extension of the contacting rail 21. This allows for the contacting head 13 to contact the contacting surfaces 27, 28, and the contacting plates 29a, 29b at any position along the contacting rail 21.

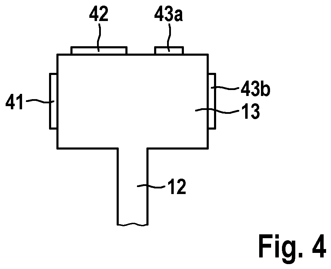

The contacting head 13 is constructed accordingly, as shown in Figure 4. The contacting head 13 at the end of the contacting post 12 has a first side contact 41 and a second side contact 42 as well as a first earth contact 43a and a second earth contact 43b, so that when the contacting head 13 enters the inner area of the U-shaped contacting rail 21, the contacts 41, 42, 43a, 43b contact the first and second contacting surfaces 27, 28 and the first and second earth plates 29a, 29b, respectively.

This configuration has the advantages that the earth connection is made first and disconnected last when coupling or decoupling. Furthermore, an earth resistance measurement may be configured to firstly check the quality (resistance) of the top earth connection and therefore the certainty that the head is fully inserted. With above configuration a partial insertion or misalignment can not lead to a situation where a power contact is connect to earth or that the power contacts are inverted.

According to another embodiment, instead of the upside down U-shaped contacting rail 12 the contacting rail could also be orientated so that it has a form similar to a C in cross section and connection to contacting rail 12 would occur horizontally, i.e. from the side. This might require a substantial L-shaped contacting rod where the contacting head extends laterally from the contacting rod.

The control unit 16 is capable of detecting an absolute position of the contacting rail 21 and/or a relative position of the contacting rail 21 with respect to the contacting head 13. So, firstly a horizontal alignment of the contacting head 13 and subsequently a vertical alignment of the contacting head 13 can be carried out in order to insert the contacting head 13 into the U-shape of the contacting rail 21, so that, as soon as the bus has stopped close to the charging station 2, a connection between the electrically driven vehicle 3 and the charging station 2 can be established.

The control unit 16 may include an optical detector 17 as a detecting means which searches for a target element or pattern indicating the exact position of the contacting rail 21. In the present embodiment, the target element may comprise two optically recognizable stripes 33, such as fluorescent stripes, on the lower downwardly facing side of the extension 25, 26 of the contacting rail 21, so that it can be recognized by the optical detector 17 arranged at the control unit 16 on the rooftop 32 of the electrically driven vehicle 3. The two stripes 33 are detectable by the optical detector 17 and clearly indicate the position of the inner space of the U-shaped contacting rail 21 as the space between the stripes 33, so that the contacting head 13 can easily be moved and positioned into the contacting rail 21.

Apart from the control unit 16 using the optical detector 17, other detector means can also be used which allow for detecting a position of the contacting head receiving means 20 and the contacting rail 21. It is preferred that the positioning at the contacting rail 21 or the contacting head receiving means 20 is performed without any additional means, so that a robust and simple positioning system can be implemented. Other detecting means might include proximity sensors, radar sensors and the like. However, visually guided alignment means that are based on laser or a camera system are easy to implement as they only require optical markers at the contacting head receiving means 20, if any.

The vehicle 3 can be equipped with a geo-positioning system 18 which provides geographical position information about the geographical position of the vehicle 3. The control unit 16 can be configured to receive the geographical position information and to determine by comparison with a provided set of bus stop positions (charging station positions) whether the bus approaches a bus stop. If approaching a bus stop is detected, the control unit 16 can be activated and a lifting of the contacting head 13 to an elevated position between the rooftop 32 and the contacting head receiving means 20 can be commanded in order to shorten time for establishing a contact to the contacting head receiving means 20. The geo-positioning system 18 can be included in the connecting apparatus as well.

On the side of the charging station 2, a supply unit 51 is provided which controls the supply of charging power to the contacting rail 21.

In order to trigger the supply unit 51 to supply the charging power, a test current may be passed from the electrically driven vehicle 3 through the first and second earth plates 29a, 29b functioning as earth contacts, and which are interconnected in the charging station 2, and the current and voltage drops of the bridged earth contacts are measured to give the contact resistance. The test current is also sensed at the side of the charging station 2 to find out whether a connection at the contacting rail 21 is established. It may be provided that the supply of electrical power to the contacting rail 21 is activated only in case the test current is detected.

As soon as the contact resistance between the electrically driven vehicle 3 and the charging station 2 becomes too high, which is the case when the control unit 16 controls the horizontal positioning means 11 and/or the pivoting and vertical positioning means 14, 15 to remove the contacting head 13 from the contacting rail 21, the charging process is stopped and the primary circuit is isolated.

According to another embodiment, a charging system may include a charging station and an electrically driven vehicle 3 where the connecting arrangement 10 with the above described configurations may be provided at the charging station and which serves to feed electricity to the vehicle, while the contacting rail 21 which may have the above described configurations, may be attached to the vehicle to be connected by the contacting head. The movement to align the contacting head towards the contacting head receiving means is then be carried out by the connecting apparatus mounted on the charging station.

According to a further example also two connecting arrangements can be provided on the vehicle and the charging station which are moved towards each other to establish a connection. In this case one of the connecting arrangements is provided with a contacting rail instead of the contact head.

### Reference list

- 1: charging system
- 2: charging station
- 3: vehicle
- 10: connecting arrangement
- 11: horizontal positioning means
- 12: contacting post
- 13: contacting head
- 14: pivoting means
- 15: vertical positioning means
- 16: control unit
- 17: optical detector
- 18: geo-positioning system
- 20: contacting head receiving means
- 21: contacting rail
- 22: base portion
- 23: first leg portion
- 24: second leg portion
- 25: first extension
- 26: second extension
- 27: first contacting surface
- 28: second contacting surface
- 29a, 29b: first and second earth plate, earth contacts
- 31: electrical energy storage device
- 32: rooftop
- 33: recognizable stripes
- 41: first side contact
- 42: second side contact
- 43a, 43b: first and second earth contact
- 51: supply unit

## Claims

1. Connecting apparatus (10) for mounting on a rooftop of a vehicle (3) or at a charging station and for providing an electrical connection between the charging station and the vehicle (3) for charging an electrical energy storage device (31) of the vehicle (3), the connecting apparatus (10) comprising:
- a contacting head (13) for connecting to contacting head receiving means (20, 21) for transferring electrical energy;
- at least one alignment means (11, 14, 15) for coupling the contacting head (13) to the contacting head receiving means (20, 21) for electrically connecting to or disconnecting from the contacting head receiving means (20, 21), respectively;
- a detector means (17) configured to determine a position of the contacting head receiving means (20, 21); and
- a control unit (16) for controlling alignment between the contacting head (13) and the contacting head receiving means (20, 21) in response to the determined position of the contacting head receiving means (20, 21);, wherein
- the at least one alignment means (11, 14, 15) comprises a horizontal positioning means (11) for laterally moving the contacting head (13) in a horizontal direction; **characterized in that**,
- a pivoting means (14) for pivoting a contacting post (12) carrying the contacting head (13) at one end thereof from a parking position, in which the contacting post (12) is substantially horizontal to a contacting position, in which the contacting post (12) is elevated up to a vertical position; and
- a vertical positioning means (15) by telescoping the contacting post (12) across the horizontal direction to adapt the length of the contacting post (12);
- wherein each of the horizontal positioning means (11), the pivoting means (14) and the vertical positioning means (15) performing an alignment movement and wherein each of the alignment movement being independent from the others.

2. Connecting apparatus according claim 1, wherein the detector means (17) is configured to determine the position of the contacting head receiving means (20, 21) as an absolute position in relation to the location of the detector means (17) or as a relative position in relation to the location of the contacting head (13).

3. Connecting apparatus according to claim 1 or 2, wherein the detector means (17) comprises an optical detector.

4. Connecting apparatus according to any one of claims 1 to 3, wherein the horizontal positioning means (11), the pivoting means (14) and vertical positioning means (15) are actuated by individual electrical, pneumatic, or hydraulic actuators.

5. Connecting apparatus according to any one of claims 1 to 4, wherein the contacting head (13) has a first side contact (41) and a second side contact (42) as well as a first earth contact (43a) and a second earth contact (43b).

6. Connecting apparatus according to any one of claims 1 to 5, wherein the at least one alignment means (11, 14, 15) is a visually guided alignment means (11, 14, 15).

7. Connecting apparatus according to claim 6, wherein the visually guided alignment means (11, 14, 15) is based on a laser.

8. Vehicle (3) comprising electrical driving means comprising:
- a connecting apparatus according to any one of claims 1 to 7 arranged on a vehicle body.

9. Vehicle (3) comprising electrical driving means according to claim 8, comprising: a contacting head receiving means (20, 21) having contacting surfaces (27, 28) for being contacted through a contacting head (13), wherein the contacting head receiving means (20, 21) has a longitudinal contacting rail (21) with a U-shaped cross section.

10. Vehicle (3) according to claim 9, wherein the contacting surfaces (27, 28) are arranged in the inner of the U-shaped cross section and extend substantially in parallel along the contacting rail (21).

11. Vehicle (3) according to claim 10, wherein an optical marker (33) is attached at the contacting head receiving means (20, 21) to allow an optical detector to determine the position of the contacting head receiving means (20, 21).

12. Vehicle (3) according to claim 11, wherein the optical marker (33) extends in the longitudinal direction of the contacting rail (21), wherein the optical marker (33) includes two parallel recognizable stripes between which an opening of the U-shaped cross section is arranged.

13. Charging station (2) for supplying electrical energy to a vehicle (3) via said connecting apparatus (10), wherein a contacting head receiving means (20, 21) is provided having contacting surfaces (27, 28) for contacting a contacting head (13); wherein the contacting head receiving means (20, 21) has a longitudinal contacting rail (21) with an U-shaped cross section, **characterized in that**, the contacting head receiving means (20, 21) is further provided with a first earth plate (29a) and a second earth plate (29b) and wherein the contacting surfaces (27, 28), the first earth plate (29a) and the second earth plate (29b) are arranged in the inner of the U-shaped cross section and extend substantially in parallel along the contacting rail (21).

14. Charging station (2) according to claim 13, wherein the contacting surface (27) is provided at an inner side of a first leg portion (23) of the contacting rail (21), wherein the contacting surface (28) and the first earth plate (29a) are provided at an inner side of a base portion (22) of the contacting rail (21) and wherein the second earth plate (29b) is provided at an inner side of a second leg portion (23) of the contacting rail (21).

15. Charging station (2) according to claim 14, wherein an optical marker (33) is attached to the contacting head receiving means (20, 21) to allow an optical detector to determine the position of the contacting head receiving means (20, 21).

16. Charging station (2) according to claim 15, wherein the optical marker (33) extends in the longitudinal direction of the contacting rail (21), wherein the optical marker (33) includes two parallel recognizable stripes between which an opening of the U-shaped cross section is arranged.

17. Charging station (2) for supplying electrical energy to a vehicle (3), wherein the charging station (2) is provided with a connecting apparatus (10) according to one of the claims 1 to 7.

18. Method for charging an electrical energy storing device of a vehicle (3) using a connecting apparatus (10) according to one of the claims 1 to 7, comprising the steps of:
- detecting the position of a contacting head receiving means (20, 21); and
- positioning a contacting head (13) into the contacting head receiving means (20, 21), **characterized by**
- pivot positioning a contacting post (12) carrying a contacting head (13) at one end thereof from a parking position, in which the contacting post (12) is substantially horizontal to a contacting position, in which the contacting post (12) is elevated up to a vertical position, thereafter
- horizontally positioning the contacting head (13) and
- vertically positioning the contacting head (13) for transferring electrical energy in response to the determined position of the contacting head receiving means (20, 21).

19. Method according to claim 18, wherein the detecting position of the contacting head receiving means (20, 21) is performed by recognizing a position of an optical marker (33) at the contacting head receiving means (20, 21) using an optical detector.

20. Method according to claim 18 or 19, wherein it is detected whether the contacting head (13) is connected to the contacting head receiving means (20, 21) and wherein electrical energy is transferred to the electrical energy storing device (31) if the electrical connection with the contacting head (13) is detected.

21. Method according to claim 20, wherein the detection whether the contacting head (13) is connected to the contacting head receiving means (20, 21) is made by establishing an earth connection between a first and second earth plate (29a, 29b) of a contacting rail (21) of the contacting head receiving means (20) to a first and second earth contact (43a, 43b) of the contacting head (13) and performing an earth resistance measurement between the earth plates (29a, 29b) and the earth contacts (43a, 43b).

## Patentansprüche

1. Verbindungsvorrichtung (10) zum Anbringung auf einer Dachfläche eines Fahrzeugs (3) oder an einer Ladestation und zum Bereitstellen einer elektrischen Verbindung zwischen der Ladestation und dem Fahrzeug (3) zum Laden einer elektrischen Energiespeichervorrichtung (31) des Fahrzeugs (3), wobei die Verbindungsvorrichtung (10) umfasst:
- einen Kontaktkopf (13) zum Verbinden mit Kontaktkopf-Aufnahmemitteln (20, 21) zum Übertragen von elektrischer Energie;
- wenigstens ein Ausrichtmittel (11, 14, 15) zum Kuppeln des Kontaktkopfes (13) mit den Kontaktkopf-Aufnahmemitteln (20, 21) zum elektrischen Verbinden mit bzw. Trennen von den Kontaktkopf-Aufnahmemitteln (20, 21);
- ein Detektormittel (17), das dafür ausgelegt ist, eine Position der Kontaktkopf-Aufnahmemittel (20, 21) zu bestimmen; und
- eine Steuereinheit (16) zum Steuern der Ausrichtung zwischen dem Kontaktkopf (13) und den Kontaktkopf-Aufnahmemitteln (20, 21) in Reaktion auf die bestimmte Position der Kontaktkopf-Aufnahmemittel (20, 21); wobei
- das wenigstens eine Ausrichtmittel (11, 14, 15) ein horizontales Positioniermittel (11) zum seitlichen Bewegen des Kontaktkopfes (13) in einer horizontalen Richtung umfasst; **dadurch gekennzeichnet, dass**
- ein Schwenkmittel (14) zum Schwenken eines Kontaktpfostens (12), der an einem seiner Enden den Kontaktkopf (13) trägt, aus einer Parkposition, in welcher der Kontaktpfosten (12) im Wesentlichen horizontal ist, in eine Kontaktposition, in welcher der Kontaktpfosten (12) in eine vertikale Position aufgerichtet ist; und
- ein vertikales Positioniermittel (15) zum Teleskopieren des Kontaktpfostens (12) quer zur horizontalen Richtung, um die Länge des Kontaktpfostens (12) anzupassen;
- wobei das horizontale Positioniermittel (11), das Schwenkmittel (14) und das vertikale Positioniermittel (15) jeweils eine Ausrichtbewegung ausführen und wobei jede der Ausrichtbewegungen von den anderen unabhängig ist.

2. Verbindungsvorrichtung nach Anspruch 1, wobei das Detektormittel (17) dafür ausgelegt ist, die Position der Kontaktkopf-Aufnahmemittel (20, 21) als eine absolute Position in Bezug auf den Ort des Detektormittels (17) oder als eine relative Position in Bezug auf den Ort des Kontaktkopfes (13) zu bestimmen.

3. Verbindungsvorrichtung nach Anspruch 1 oder 2, wobei das Detektormittel (17) einen optischen Detektor umfasst.

4. Verbindungsvorrichtung nach einem der Ansprüche 1 bis 3, wobei das horizontale Positioniermittel (11), das Schwenkmittel (14) und das vertikale Positioniermittel (15) durch einzelne elektrische, pneumatische oder hydraulische Stellantriebe betätigt werden.

5. Verbindungsvorrichtung nach einem der Ansprüche 1 bis 4, wobei der Kontaktkopf (13) einen ersten Seitenkontakt (41) und einen zweiten Seitenkontakt (42) sowie einen ersten Erdkontakt (43a) und einen zweiten Erdkontakt (43b) aufweist.

6. Verbindungsvorrichtung nach einem der Ansprüche 1 bis 5, wobei das wenigstens eine Ausrichtmittel (11, 14, 15) ein visuell geführtes Ausrichtmittel (11, 14, 15) ist.

7. Verbindungsvorrichtung nach Anspruch 6, wobei das visuell geführte Ausrichtmittel (11, 14, 15) auf einem Laser basiert.

8. Fahrzeug (3), welches elektrische Antriebsmittel umfasst, umfassend:
- eine Verbindungsvorrichtung nach einem der Ansprüche 1 bis 7, die auf einer Fahrzeugkarosserie angeordnet ist.

9. Fahrzeug (3), welches elektrische Antriebsmittel umfasst, nach Anspruch 8, umfassend: ein Kontaktkopf-Aufnahmemittel (20, 21), das Kontaktflächen (27, 28) zum Kontaktiertwerden durch einen Kontaktkopf (13) aufweist, wobei das Kontaktkopf-Aufnahmemittel (20, 21) eine längs verlaufende Kontaktschiene (21) mit einem U-förmigen Querschnitt aufweist.

10. Fahrzeug (3) nach Anspruch 9, wobei die Kontaktflächen (27, 28) im Inneren des U-förmigen Querschnitts angeordnet sind und sich im Wesentlichen parallel entlang der Kontaktschiene (21) erstrecken.

11. Fahrzeug (3) nach Anspruch 10, wobei eine optische Markierung (33) an dem Kontaktkopf-Aufnahmemittel (20, 21) angebracht ist, um einem optischen Detektor zu ermöglichen, die Position des Kontaktkopf-Aufnahmemittels (20, 21) zu bestimmen.

12. Fahrzeug (3) nach Anspruch 11, wobei sich die optische Markierung (33) in der Längsrichtung der Kontaktschiene (21) erstreckt, wobei die optische Markierung (33) zwei parallele erkennbare Streifen aufweist, zwischen denen eine Öffnung des U-förmigen Querschnitts angeordnet ist.

13. Ladestation (2) zum Zuführen elektrischer Energie zu einem Fahrzeug (3) über die Verbindungsvorrichtung (10), wobei ein Kontaktkopf-Aufnahmemittel (20, 21) vorgesehen ist, das Kontaktflächen (27, 28) zum Kontaktieren eines Kontaktkopfes (13) aufweist; wobei das Kontaktkopf-Aufnahmemittel (20, 21) eine längs verlaufende Kontaktschiene (21) mit einem U-förmigen Querschnitt aufweist, **dadurch gekennzeichnet, dass** das Kontaktkopf-Aufnahmemittel (20, 21) ferner mit einer ersten Erdungsplatte (29a) und einer zweiten Erdungsplatte (29b) versehen ist, und wobei die Kontaktflächen (27, 28), die erste Erdungsplatte (29a) und die zweite Erdungsplatte (29b) im Inneren des U-förmigen Querschnitts angeordnet sind und sich im Wesentlichen parallel entlang der Kontaktschiene (21) erstrecken.

14. Ladestation (2) nach Anspruch 13, wobei die Kontaktfläche (27) an einer Innenseite eines ersten Schenkelabschnitts (23) der Kontaktschiene (21) vorgesehen ist, wobei die Kontaktfläche (28) und die erste Erdungsplatte (29a) an einer Innenseite eines Basisabschnitts (22) der Kontaktschiene (21) vorgesehen sind, und wobei die zweite Erdungsplatte (29b) an einer Innenseite eines zweiten Schenkelabschnitts (23) der Kontaktschiene (21) vorgesehen ist.

15. Ladestation (2) nach Anspruch 14, wobei eine optische Markierung (33) an dem Kontaktkopf-Aufnahmemittel (20, 21) angebracht ist, um einem optischen Detektor zu ermöglichen, die Position des Kontaktkopf-Aufnahmemittels (20, 21) zu bestimmen.

16. Ladestation (2) nach Anspruch 15, wobei sich die optische Markierung (33) in der Längsrichtung der Kontaktschiene (21) erstreckt, wobei die optische Markierung (33) zwei parallele erkennbare Streifen aufweist, zwischen denen eine Öffnung des U-förmigen Querschnitts angeordnet ist.

17. Ladestation (2) zum Zuführen elektrischer Energie zu einem Fahrzeug (3), wobei die Ladestation (2) mit einer Verbindungsvorrichtung (10) nach einem der Ansprüche 1 bis 7 versehen ist.

18. Verfahren zum Laden einer elektrischen Energiespeichervorrichtung eines Fahrzeugs (3) unter Verwendung einer Verbindungsvorrichtung (10) nach einem der Ansprüche 1 bis 7, die folgenden Schritte umfassend:
- Erfassen der Position eines Kontaktkopf-Aufnahmemittels (20, 21); und
- Positionieren eines Kontaktkopfes (13) in das Kontaktkopf-Aufnahmemittel (20, 21),
**gekennzeichnet durch**
- Positionieren eines Kontaktpfostens (12), der an einem seiner Enden einen Kontaktkopf (13) trägt, durch Schwenken aus einer Parkposition, in welcher der Kontaktpfosten (12) im Wesentlichen horizontal ist, in eine Kontaktposition, in welcher der Kontaktpfosten (12) in eine vertikale Position aufgerichtet ist, anschließend
- horizontales Positionieren des Kontaktkopfes (13) und
- vertikales Positionieren des Kontaktkopfes (13) zum Übertragen von elektrischer Energie in Reaktion auf die bestimmte Position des Kontaktkopf-Aufnahmemittels (20, 21).

19. Verfahren nach Anspruch 18, wobei das Erfassen der Position des Kontaktkopf-Aufnahmemittels (20, 21) durchgeführt wird, indem eine Position einer optischen Markierung (33) an dem Kontaktkopf-Aufnahmemittel (20, 21) unter Verwendung eines optischen Detektors erkannt wird.

20. Verfahren nach Anspruch 18 oder 19, wobei erfasst wird, ob der Kontaktkopf (13) mit dem Kontaktkopf-Aufnahmemittel (20, 21) verbunden ist, und wobei elektrische Energie zu der elektrischen Energiespeichervorrichtung (31) übertragen wird, falls die elektrische Verbindung mit dem Kontaktkopf (13) erfasst wird.

21. Verfahren nach Anspruch 20, wobei die Erfassung, ob der Kontaktkopf (13) mit dem Kontaktkopf-Aufnahmemittel (20, 21) verbunden ist, vorgenommen wird, indem eine Erdverbindung zwischen einer ersten und zweiten Erdungsplatte (29a, 29b) einer Kontaktschiene (21) des Kontaktkopf-Aufnahmemittels (20) mit einem ersten und zweiten Erdkontakt (43a, 43b) des Kontaktkopfes (13) hergestellt wird und eine Erdungswiderstandsmessung zwischen den Erdungsplatten (29a, 29b) und den Erdkontakten (43a, 43b) durchgeführt wird.

## Revendications

1. Appareil de connexion (10) destiné à être monté sur un toit d'un véhicule (3) ou au niveau d'une station de chargement et servant à assurer une connexion électrique entre la station de chargement et le véhicule (3) pour charger un dispositif de stockage d'énergie électrique (31) du véhicule (3), l'appareil de connexion (10) comprenant :
une tête de contact (13), destinée à être connectée à un moyen de réception de tête de contact (20, 21) pour transférer l'énergie électrique ;
au moins un moyen d'alignement (11, 14, 15), permettant d'accoupler la tête de contact (13) au moyen de réception de tête de contact (20, 21) pour respectivement la connecter électriquement au moyen de réception de tête de contact (20, 21) ou l'en déconnecter ;
un moyen de détection (17), conçu pour déterminer une position du moyen de réception de tête de contact (20, 21) ; et
une unité de contrôle (16), permettant de contrôler l'alignement entre la tête de contact (13) et le moyen de réception de tête de contact (20, 21) en réponse à la position déterminée du moyen de réception de tête de contact (20, 21),
l'au moins un moyen d'alignement (11, 14, 15) comprenant un moyen de positionnement horizontal (11) permettant de déplacer latéralement la tête de contact (13) en direction horizontale, **caractérisé en ce que** :
un moyen de pivotement (14), permettant de faire pivoter un support de contact (12) transportant la tête de contact (13) à une extrémité correspondante à partir d'une position de stationnement, dans laquelle le support de contact (12) est sensiblement horizontal par rapport à une position de contact, dans laquelle le support de contact (12) est élevé jusqu'à une position verticale ; et
un moyen de positionnement vertical (15) en emboîtant le support de contact (12) suivant la direction horizontale pour adapter la longueur du support de contact (12) ;
le moyen de positionnement horizontal (11), le moyen de pivotement (14) et le moyen de positionnement vertical (15) réalisant chacun un déplacement d'alignement, chaque déplacement d'alignement étant indépendant des autres.

2. Appareil de connexion selon la revendication 1, dans lequel le moyen de détection (17) est conçu pour déterminer la position du moyen de réception de tête de contact (20, 21) en guise de position absolue par rapport à l'emplacement du moyen de détection (17) ou en guise de position relative par rapport à l'emplacement de la tête de contact (13).

3. Appareil de connexion selon la revendication 1 ou 2, dans lequel le moyen de détection (17) comprend un détecteur optique.

4. Appareil de connexion selon l'une quelconque des revendications 1 à 3, dans lequel le moyen de positionnement horizontal (11), le moyen de pivotement (14) et le moyen de positionnement vertical (15) sont actionnés par des actionneurs électriques, pneumatiques ou hydrauliques individuels.

5. Appareil de connexion selon l'une quelconque des revendications 1 à 4, dans lequel la tête de contact (13) a un premier contact latéral (41) et un second contact latéral (42), ainsi qu'un premier contact de terre (43a) et un second contact de terre (43b).

6. Appareil de connexion selon l'une quelconque des revendications 1 à 5, dans lequel l'au moins moyen d'alignement (11, 14, 15) est un moyen d'alignement guidé visuellement (11, 14, 15).

7. Appareil de connexion selon la revendication 6, dans lequel le moyen d'alignement guidé visuellement (11, 14, 15) est basé sur un laser.

8. Véhicule (3) comprenant un moyen de conduite électrique comprenant :
un appareil de connexion selon l'une quelconque des revendications 1 à 7 disposé sur une caisse de véhicule.

9. Véhicule (3) comprenant un moyen de conduite électrique selon la revendication 8, comprenant : un moyen de réception de tête de contact (20, 21) ayant des surfaces de contact (27, 28) destinées à entrer en contact avec une tête de contact (13), le moyen de réception de tête de contact (20, 21) comportant un rail de contact longitudinal (21) ayant une section transversale en forme de U.

10. Véhicule (3) selon la revendication 9, dans lequel les surfaces de contact (27, 28) sont disposées à l'intérieur de la section transversale en forme de U et s'étendent sensiblement en parallèle le long du rail de contact (21).

11. Véhicule (3) selon la revendication 10, dans lequel un marqueur optique (33) est fixé au moyen de réception de tête de contact (20, 21) pour permettre à un détecteur optique de déterminer la position du moyen de réception de tête de contact (20, 21).

12. Véhicule (3) selon la revendication 11, dans lequel le marqueur optique (33) s'étend dans la direction longitudinale du rail de contact (21), et dans lequel le marqueur optique (33) comprend de bandes reconnaissables parallèles entre lesquelles est disposée une ouverture de la section transversale en forme de U.

13. Station de chargement (2) permettant d'alimenter un véhicule (3) en énergie électrique par l'intermédiaire dudit appareil de connexion (10) muni d'un moyen de réception de tête de contact (20, 21) ayant des surfaces de contact (27, 28) destinées à entrer en contact avec une tête de contact (13), le moyen de réception de tête de contact (20, 21) comportant un rail de contact longitudinal (21) ayant une section transversale en forme de U, ladite station de chargement étant **caractérisée en ce que** le moyen de réception de tête de contact (20, 21) comprend en outre une première plaque de terre (29a) et une seconde plaque de terre (29b), et les surfaces de contact (27, 28), la première plaque de terre (29a) et la seconde plaque de terre (29b) étant disposées à l'intérieur de la section transversale en forme de U et s'étendant sensiblement en parallèle le long du rail de contact (21).

14. Station de chargement (2) selon la revendication 13, dans laquelle la surface de contact (27) est située au niveau d'un côté intérieur d'une première partie faisant patte (23) du rail de contact (21), dans laquelle la surface de contact (28) et la première plaque de terre (29a) sont situées au niveau d'un côté intérieur d'une partie faisant base (22) du rail de contact (21), et dans laquelle la seconde plaque de terre (29b) est située au niveau d'un côté intérieur d'une seconde partie faisant patte (23) du rail de contact (21).

15. Station de chargement (2) selon la revendication 14, dans lequel un marqueur optique (33) est fixé au moyen de réception de tête de contact (20, 21) pour permettre à un détecteur optique de déterminer la position du moyen de réception de tête de contact (20, 21).

16. Station de chargement (2) selon la revendication 15, dans lequel le marqueur optique (33) s'étend dans la direction longitudinale du rail de contact (21), et dans lequel le marqueur optique (33) comprend de bandes reconnaissables parallèles entre lesquelles est disposée une ouverture de la section transversale en forme de U.

17. Station de chargement (2) permettant d'alimenter un véhicule (3) en énergie électrique, la station de chargement (2) étant munie d'un appareil de connexion (10) selon l'une quelconque des revendications 1 à 7.

18. Procédé de chargement d'un dispositif de stockage d'énergie électrique d'un véhicule (3) au moyen d'un appareil de connexion (10) selon l'une quelconque des revendications 1 à 7, comprenant les étapes consistant à :
détecter la position d'un moyen de réception de tête de contact (20, 21) ; et
positionner une tête de contact (13) dans le moyen de réception de tête de contact (20, 21) ; et **caractérisé par** les étapes consistant à :
positionner par pivotement un support de contact (12) transportant une tête de contact (13) à une extrémité correspondante à partir d'une position de stationnement, dans laquelle le support de contact (12) est sensiblement horizontal par rapport à une position de contact, dans laquelle le support de contact (12) est élevé jusqu'à une position verticale, puis positionner horizontalement la tête de contact (13) ; et
positionner verticalement la tête de contact (13) pour transférer de l'énergie électrique en réponse à la position déterminée du moyen de réception de tête de contact (20, 21).

19. Procédé selon la revendication 18, dans lequel l'étape consistant à détecter la position du moyen de réception de tête de contact (20, 21) est réalisée en reconnaissant une position d'un marqueur optique (33) au niveau du moyen de réception de tête de contact (20, 21) au moyen d'un détecteur optique.

20. Procédé selon la revendication 18 ou 19, dans lequel il est détecté si la tête de contact (13) est connectée au moyen de réception de tête de contact (20, 21), et dans lequel de l'énergie électrique est transférée au dispositif de stockage d'énergie électrique (31) si la connexion électrique avec la tête de contact (13) est détectée.

21. Procédé selon la revendication 20, dans lequel l'étape consistant à détecter si la tête de contact (13) est connectée au moyen de réception de tête de contact (20, 21) est réalisée en établissant une connexion de terre entre une première et une seconde plaque de terre (29a, 29b) d'un rail de contact (21) du moyen de réception de tête de contact (20) et un premier et un second contact de terre (43a, 43b) de la tête de contact (13), et en réalisation une mesure de résistance de terre entre les plaques de terre (29a, 29b) et les contacts de terre (43a, 43b).
